# EUROPÄISCHE PATENTANMELDUNG

(11) **EP 2 469 174 A2**
(43) Veröffentlichungstag der Anmeldung: **27.06.2012**
(21) Anmeldenummer: 11401659.5
(22) Anmeldetag: 07.12.2011
(51) Int. Cl.: F24C 7/08, F24C 15/32

(54) **Gargerät**

(30) Priorität: 22.12.2010 DE 102010061472
(71) Anmelder: Miele & Cie. KG, 33332 Gütersloh (DE)
(72) Erfinder: Becker, Torben, 33613 Bielefeld (DE); Scharmann, Jürgen, 33442 Herzebrock-Clarholz (DE); Sillmen, Ulrich, 33332 Gütersloh (DE)

(57) **Zusammenfassung**

Gargerät (1) und Verfahren zum Betreiben eines Gargerätes (1), wobei das Gargerät (1) ein Gehäuse (2) und einen daran vorgesehenen Garraum (3), eine Steuereinrichtung (4), eine Heizeinrichtung (5) und eine Messeinrichtung (6) umfasst, um ein Maß für die relative Luftfeuchtigkeit (7) in dem Garraum (3) zu bestimmen. Die Messeinrichtung (6) umfasst einen Abfuhrkanal (8) zur Ableitung einer Probe aus dem Garraum (3). Der Abfuhrkanal (8) umfasst einen Kondensationsabschnitt (10) mit einem Temperatursensor (11). Der Temperatursensor (11) ist zur Erfassung einer charakteristischen Kondensationstemperatur (10) der Probe geeignet und vorgesehen.

## Beschreibung

Die Erfindung betrifft ein Gargerät und insbesondere einen Backofen mit einem Gehäuse und einem darin vorgesehenen Garraum, wenigstens einer Steuereinrichtung zur Steuerung des Garbetriebs und wenigstens einer Heizeinrichtung, sowie mit wenigstens einer Messeinrichtung, um ein Maß für die Luftfeuchtigkeit in dem Garraum zu bestimmen.

Im Stand der Technik sind Backöfen bekannt geworden, die mit einer Messeinrichtung ausgerüstet sind, um ein Maß für die relative Luftfeuchtigkeit in dem Garraum während des Garprozesses zu bestimmen. Messdaten über die relative Luftfeuchtigkeit können dabei beispielsweise zur Ermittlung des Fertigzeitpunktes bei programmgesteuerten Garprogrammen, sogenannten Automatikprogrammen, eingesetzt werden. Beispielsweise ist mit der WO 2006/056305 A1 ein Backofen mit einem Wrasenkanal bekannt geworden, in dem ein Katalysator angeordnet ist und bei dem ein Feuchtesensor als Halbleitergassensor ausgebildet ist, um über die Bestimmung des Sauerstoffanteils auf die Feuchte zurückzuschließen und darüber den Garprozess zu steuern.

Die WO 2006/042708A1 offenbart ein Verfahren zur Steuerung eines Garvorgangs an einem Backofen, bei dem während des Garvorgangs die Gaskonzentration erfasst wird. Mit der ermittelten Gaskonzentration über die Zeit wird der Garprozess gesteuert. Zur Ermittlung der relativen Luftfeuchte in dem Garraum kann ein Sauerstoffsensor oder ein Kohlendioxidsensor eingesetzt werden.

Backöfen gemäß der WO 2006/042708A1 und gemäß der WO 2006/056305 A1 funktionieren zuverlässig. Nachteilig sind allerdings die Kosten der verwendeten Sensoren und, dass Sauerstoffsensoren empfindlich gegenüber Bestandteilen des Wrasens sein können.

Mit der DE 10 2006 058 617 D3 ist ein weiteres Verfahren zur Bestimmung des zeitlichen Verlaufs des während eines Garvorgangs in einem Garraum eines Backofens von einem Gargut abgegebenen Dampfmenge bekannt geworden, wobei ein an den Garraum strömungsleitend angeschlossener Wrasenkanal vorgesehen ist, in den ein Messkopf eines Wärmeleitkörpers zur Wärmeleitung an einen außerhalb an dem Garraum und dem Wrasenkanal angeordneten Kühlkörper hineinragt. Dabei wird der Messkopf vor Niederschlag von Kondensat auf der Messkopfoberfläche geschützt und es wird der zeitliche Verlauf der Temperatur an dem Messkopf des Wärmeleitkörpers mittels eines Temperatursensors erfasst. Auch dieses System funktioniert bei relativ hohen Feuchtekonzentrationen zuverlässig. Bei der Anwendung im Backofen ist die Dynamik des Nutzsignals aber gegebenenfalls gering und kann von Nebeneffekten wie z.B. der Katalysatortemperatur überlagert werden.

Mit der EP 1 847 203 B1 ist ein Verfahren zum Zubereiten von Gargut in einem Garraum eines Gargerätes bekannt geworden, wobei mindestens während eines Teils der Aufwärmphase mit einem Dampfgenerator dem Garraum Dampf zugeführt wird. Das Verfahren wird darüber gesteuert, dass ein Dampfaustritt aus dem Garraum detektiert und daraufhin die Heizleistung des Dampfgenerators reduziert wird. Im Folgenden wird der Garprozess anhand der ermittelten Zeitparameter gesteuert. Dieses Verfahren ermöglicht die Steuerung des Garprozesses nach Ermittlung eines Dampfaustritts aus dem Garraum, ermöglicht aber nicht die Steuerung des Garprozesses in Abhängigkeit von der relativen Luftfeuchtigkeit in dem Garraum. Die Ermittlung der relativen Feuchtigkeit in dem Garraum ist so nicht möglich.

Es ist deshalb die Aufgabe der vorliegenden Erfindung, ein Gargerät und ein Verfahren zum Betreiben eines Gargeräts zur Verfügung zu stellen, womit ein Maß für die Luftfeuchtigkeit in dem Garraum kostengünstig und zuverlässig ermittelt werden kann.

Diese Aufgabe wird gelöst durch ein Gargerät mit den Merkmalen des Anspruchs 1 und durch ein Verfahren mit den Merkmalen des Anspruchs 13. Bevorzugte Weiterbildungen sind Gegenstand der Unteransprüche. Weitere Vorteile und Merkmale der vorliegenden Erfindung ergeben sich aus der Beschreibung des Ausführungsbeispiels.

Das erfindungsgemäße Gargerät weist wenigstens ein Gehäuse und wenigstens einen darin vorgesehenen Garraum auf. Wenigstens eine Steuereinrichtung und wenigstens eine Heizeinrichtung sind vorgesehen. Weiterhin umfasst das erfindungsgemäße Gargerät wenigstens eine Messeinrichtung, um ein Maß für die Luftfeuchtigkeit in dem Garraum zu bestimmen. Die Messeinrichtung umfasst wenigstens einen Abfuhrkanal zur Ableitung wenigstens einer Probe aus dem Garraum. Der Abfuhrkanal umfasst einen Kondensationsabschnitt mit wenigstens einem Temperatursensor, wobei der Temperatursensor zur Erfassung einer charakteristischen Kondensationstemperatur der Probe vorgesehen ist, um aus der Kondensationstemperatur der Probe ein Maß für die Luftfeuchtigkeit in dem Garraum abzuleiten. Dabei ist die Messeinrichtung insbesondere derart ausgestaltet, dass die Bestimmung des zeitlichen Verlaufs der während eines Garvorgangs in dem Garraum von einem Gargut abgegebenen Dampfmenge bzw. die daraus resultierende Luftfeuchtigkeit in dem Garraum bestimmbar ist.

Das erfindungsgemäße Gargerät hat viele Vorteile, da es auf kostengünstige Weise zuverlässig die Ermittlung der relativen und/oder absoluten Luftfeuchtigkeit in dem Garraum über der Zeit erlaubt. Durch die Bereitstellung eines Abfuhrkanals zur Ableitung einer Probe aus dem Garraum kann die Kondensationstemperatur der Luftfeuchtigkeit in der Probe ermittelt werden und daraus auf die z.B. relative und/oder absolute Luftfeuchtigkeit in dem Garraum zurückgeschlossen werden.

Durch den einfachen Aufbau der Messeinrichtung wird ein dauerhaft zuverlässiger Betrieb ermöglicht. Der Temperatursensor an dem Kondensationsabschnitt kann robust ausgelegt werden und unterliegt praktisch keinem Verschleiß, da er nur die an dem Kondensationsabschnitt vorliegende Temperatur erfassen muss. Dabei kann der Temperatursensor vor Umwelteinflüssen und Einflüssen aus der Atmosphäre der Probe geschützt vorgesehen sein. Schädigungen durch in der Probe enthaltene Stoffe sind nicht zu befürchten. Damit ist ein dauerhaft zuverlässiger und kostengünstiger Betrieb möglich.

Das Maß für die Luftfeuchtigkeit ist insbesondere eine Messgröße, die gegebenenfalls mathematisch umgeformt wurde. Vorzugsweise ist das Maß für die Luftfeuchtigkeit derart, dass der Wert steigt, wenn die Luftfeuchtigkeit steigt und dass der Wert fällt, wenn die Luftfeuchtigkeit fällt. Das Maß für die Luftfeuchtigkeit kann sich auf die relative und/oder absolute Luftfeuchtigkeit beziehen. Vorzugsweise wird ein Maß für die relative Luftfeuchtigkeit verwendet.

Die Abfuhr einer Probe aus dem Garraum kann intermittierend in vorbestimmten oder wählbaren Zeitabständen oder kontinuierlich erfolgen, sodass ein kontinuierliches oder quasi kontinuierliches oder periodisches Signal erhalten werden kann, aus welchem die relative Luftfeuchtigkeit in dem Garraum abgeleitet werden kann.

Vorzugsweise mündet der Abfuhrkanal mit einem ersten Ende in dem Garraum und insbesondere mit einem zweiten Ende in einem Bereich der Gerätekühlung. Dort an dem zweiten Ende an dem Bereich der Gerätekühlung ist insbesondere ein Unterdruckbereich vorgesehen, der dafür sorgt, dass aus dem Garraum eine Probe abgesaugt wird. Gegebenenfalls ist es auch möglich, die Probe aktive aus dem Garraum durch einen Ventilator oder dergleichen herauszublasen oder herauszunehmen. Insbesondere ist die Gestaltung des Abfuhrkanals an dem ersten und dem zweiten Ende dergestalt, dass eine definierte und insbesondere relativ geringe Menge einer Probe aus dem Garraum abgeführt wird. Durch die definierte Abfuhr einer Probenmenge aus dem Garraum wird eine qualitativ hochwertige Kalibrierung möglich.

Vorzugsweise ist das erste Ende des Abfuhrkanals an einem rückwärtigen Ende des Garraumes vorgesehen. Vorzugsweise ist das erste Ende des Abfuhrkanals an oder in einem Ausblasbereich einer Heißluftrückwand des Garraumes oder an der Rückwand des Garraumes oder an einer Deckenwand des Garraumes vorgesehen. Die Heißluftrückwand kann dabei insbesondere in dem Garraum eingestellt sein. Wenn das in den Garraum mündende erste Ende des Abfuhrkanals in den Ausblasbereich der Heißluftrückwand oder an einem sonstigen Ausblasbereich angeordnet ist, so befindet sich das erste Ende des Abfuhrkanals in einem Überdruckbereich, der für eine selbsttätigende Ableitung einer Probe aus dem Innenraum des Garraums sorgt.

Vorzugsweise besteht der Abfuhrkanal wenigstens an dem Kondensationsabschnitt wenigstens teilweise aus wenigstens einem Metall. Insbesondere besteht der Abfuhrkanal an dem Kondensationsabschnitt aus einem gut Wärme leitenden Material, welches aus Metall oder sonstigen gut Wärme leitenden Materialen besteht. Möglich ist beispielsweise auch ein Kunststoffmaterial, welches Wärmeleitpartikel zur verbesserten Wärmeleitung aufweist.

Durch die Messung der Temperatur an dem Kondensationsabschnitt kann die Taupunkttemperatur der Probe ermittelt werden, wodurch auf einfache Weise auf die relative Luftfeuchtigkeit in dem Garraum zurückgeschlossen werden kann, da der Zusammenhang zwischen relativer Luftfeuchtigkeit und Taupunktstemperatur bekannt ist und beispielsweise in Form einer Tabelle oder einer Funktion in der Steuereinrichtung hinterlegt sein kann. Die Bestimmung der Taupunkttemperatur über die Kondensationstemperatur funktioniert zuverlässig solange, wie die Umgebungstemperatur des Kondensationsabschnitts entsprechend geringer ist als die Taupunkts- bzw. Kondensationstemperatur. Deshalb ist es bevorzugt, dass wenigstens der Kondensationsabschnitt des Abfuhrkanals kühlbar ist. Beispielsweise kann eine Kühleinrichtung an dem Kondensationsabschnitt des Abfuhrkanals vorgesehen sein. Eine solche Kühleinrichtung kann insbesondere wenigstens ein Peltierelement und/oder einen Ventilator und/oder eine Heatpipe umfassen, um den Kondensationsabschnitt zu kühlen.

Über ein Peltierelement und/oder eine Heatpipe und/oder einen Kühlkörper und/oder einen Lüfter kann der Kondensationsabschnitt auf einfache Art und Weise auf eine Temperatur abgekühlt werden, die unterhalb der Umgebungstemperatur des den Kondensationsabschnitts umgebenden Bereiches liegt. Dabei kann das Peltierelement den Kondensationsabschnitt abkühlen und die abgekühlte Wärme außerhalb des Gargerätes wieder abgeben. Eine ähnliche Funktion ist über eine Heatpipe möglich, die den Bereich des Kondensationsabschnittes effektiv kühlen und die abgeführte Wärme an einen entfernten Ort, z.B. außerhalb des Gargerätes abgeben kann. Möglich ist es auch, dass ein Ventilator vorgesehen ist, der Teil der Gerätekühlung sein kann oder aber separat zur Kühlung des Kondensationsabschnittes vorgesehen sein kann.

Der Abfuhrkanal kann eine Isolierung in Form einer Isolierschicht oder dergleichen aufweisen, wobei die Isolierung insbesondere zwischen dem ersten Ende und dem Kondensationsabschnitt vorgesehen ist, um eine vorzeitige Kondensation und Abkühlung der Probe bzw. Messprobe zu vermeiden. Die Isolierung kann sich über einen Teil der Länge oder nahezu die gesamte Länge erstrecken. Die Isolierung kann den Abfuhrkanalteilweise oder ganz umschließen

In allen Ausgestaltungen ist es besonders bevorzugt, dass die Probe aus dem Garraum durch das erste Ende des Abfuhrkanals in den Abfuhrkanal überführt wird und schließlich dem zweiten Ende des Abfuhrkanals wieder austritt, sodass auch ein Stofftransport durch den Abfuhrkanal erfolgt.

Der Abfuhrkanal kann über eine Klemme oder dergleichen verschließbar sein, wenn seine Funktion nicht benötigt wird. Ein solcher Verschluss kann als Ventil ausgeführt sein und beispielsweise durch die Steuerungseinrichtung gesteuert werden.

In allen Ausgestaltungen ist die Steuereinrichtung dazu strukturiert und dazu vorgesehen, aus der Kondensationstemperatur einen relativen Luftfeuchteanteil in dem Garraum abzuleiten. Dazu kann die Steuereinrichtung eine Auswerteeinrichtung enthalten oder es kann eine separate Auswerteeinrichtung vorgesehen sein, die die nötigen Berechnungen anstellt.

Besonders bevorzugt wird ein Temperatursensor zur Erfassung der Garraumtemperatur vorgesehen. Der Temperatursensor ist insbesondere im Inneren des Garraumes angeordnet und erfasst in periodischen Abständen oder kontinuierlich eine Maß für die Temperatur in dem Garraum. Gegebenenfalls ist es aber auch möglich, ohne einen Temperatursensor im Garraum das Gargerät zu betreiben, da davon ausgegangen werden kann, dass eine bestimmte Zeit nach dem Start eines Garvorgangs die eingestellte Solltemperatur erreicht wurde.

Besonders bevorzugt wird weiterhin ein Temperatursensor zur Erfassung der Umgebungstemperatur vorgesehen. Der Temperatursensor zur Erfassung der Umgebungstemperatur ist insbesondere in der Nähe des Kondensationsabschnittes angeordnet, um die Temperatur in der Nähe des Kondensationsabschnittes zu erfassen, ohne aber von der Temperatur des Kondensationsabschnittes beeinflusst zu werden. Wenn der Kondensationsabschnitt in die Umgebung des Gargerätes ragt oder die Wärme des Kondensationsabschnitts der Umgebung des Gargerätes direkt zugeführt wird, kann auch ein Temperatursensor zur Erfassung der Umgebungstemperatur des Gargerätes diese Funktion erfüllen. Die Umgebungstemperatur des Kondensationsabschnittes oder des Gargerätes stellt ohne Kühlung über beispielsweise ein Peltierelement eine Grenze bei der Ermittlung der relativen Luftfeuchtigkeit in dem Garraum dar. Möglich ist es auch, dass in Abhängigkeit von der Umgebungstemperatur die Kühleinrichtung zur Kühlung des Kondensationsabschnittes aktiviert wird, um auch kleinere Luftfeuchtigkeiten in dem Garraum messen zu können.

Bei dem erfindungsgemäßen Verfahren zum Betreiben eines Gargeräts wird ein Maß für die relative Luftfeuchtigkeit in dem Garraum des Gargerätes bestimmt. Dazu wird eine Probe aus dem Garraum heraus und in einen Abfuhrkanal einer Messeinrichtung geleitet. Die Probe wird wenigstens teilweise kondensiert, um aus der Kondensationstemperatur ein Maß für die relative Luftfeuchtigkeit in dem Garraum abzuleiten.

Das erfindungsgemäße Verfahren erlaubt auf eine einfache und kostengünstige und dauerhaft zuverlässige Art und Weise den Betrieb eines Gargeräts, wobei zur Steuerung des Garprozesses die relative Luftfeuchtigkeit in dem Gargerät ermittelt werden kann.

In allen Ausgestaltungen ist es möglich, dass der Abfuhrkanal separat von dem Wrasenkanal vorgesehen ist. Es ist möglich, dass die Probe vor dem Erreichen des Kondensationsabschnittes an einem Katalysator vorbeigeleitet wird.

Anhand der ermittelten Verläufe der relativen Luftfeuchtigkeit über der Zeit des laufenden Garprozesses in Verbindung mit gegebenenfalls den Temperaturverlauf des Innenraums des Garraums kann der Garprozess gesteuert werden, so wie es in der WO 2006/042708 A1 offenbart ist. Dazu wird beispielsweise die gemessene Luftfeuchtigkeit bzw. die aus den Messwerten abgeleitete Luftfeuchtigkeit über der Zeit mit Vergleichswertemengen verglichen und es werden eine oder mehrere ähnliche Vergleichswertemengen automatisch ausgewählt und daraus eine Rechenvorschrift für die Steuerung des Garprozesses abgeleitet.

Es ist möglich, dass der Garprozess automatisch beendet wird, sobald mittels der Steuereinrichtung und in Abhängigkeit von den gemessenen Daten ein Garendzeitpunkt ermittelt wurde.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1:: eine stark schematische perspektivische Ansicht eines Gargeräts als Einzelgerät;
- Fig. 2:: eine schematische perspektivische Ansicht eines Gargeräts als Einbaugerät;
- Fig. 3:: einen schematischen Querschnitt durch das Gargerät gemäß Fig. 1 oder Fig. 2;
- Fig. 4:: einen noch weiter schematisierten Querschnitt durch ein Gargerät gemäß Fig. 1 oder 2;
- Fig. 5:: einen schematisierten Querschnitt durch ein anderes Gargerät;
- Fig. 6:: einen alternativen schematisierten Querschnitt durch ein weiteres Gargerät;
- Fig. 7:: eine starke schematische Ansicht eines Abfuhrkanals des Gargeräts nach Fig. 1 oder 2; und
- Fig. 8:: die relative Luftfeuchtigkeit in dem Garraum und die Kondensationstemperatur an dem Abfuhrkanal über der Zeit während eines Garprozesses.

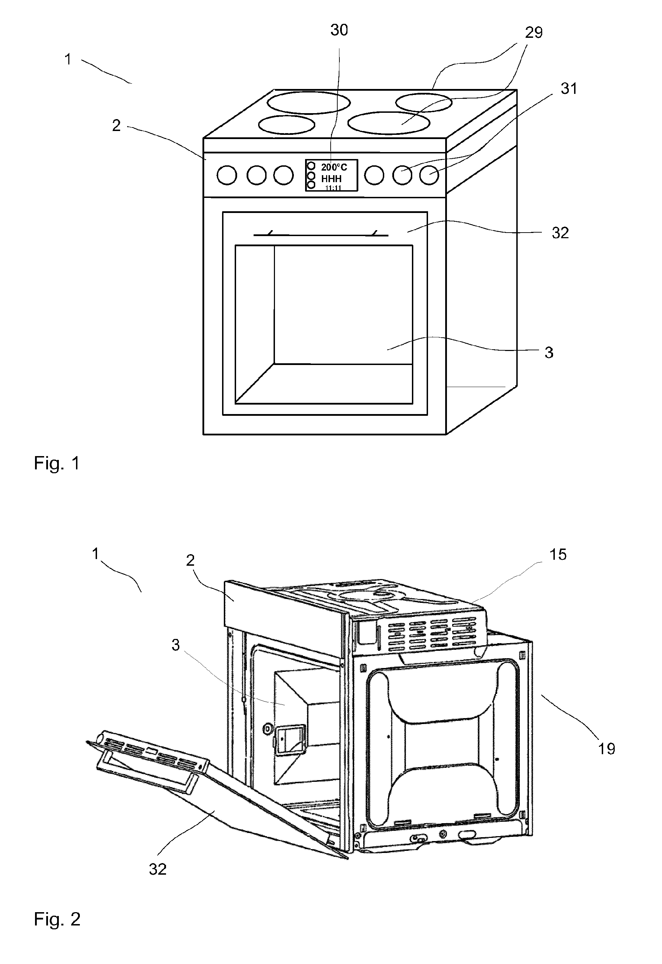

In Figur 1 ist in einer stark perspektivischen Ansicht ein erfindungsgemäßes Gargerät 1 dargestellt, welches hier als Backofen bzw. separates Standgerät ausgeführt ist. Das Gargerät 1 weist ein Gehäuse 2 auf, an dem ein Garraum 3 vorgesehen ist, der mit einer Tür 32 verschließbar ist. Bei geöffneter Tür 32 kann ein Gargut in den Garraum 3 eingebracht werden. Der Garvorgang kann über eine hier in Figur 1 nicht dargestellte Steuereinrichtung 4 gesteuert werden. Zur Bedienung des Gargerätes 1 dienen Bedienknöpfe 31 und eine Anzeige 30, die ggf. auch berührungsempfindlich sein kann und zur Anzeige und ggf. Eingabe von Bedienerangaben dient. Das Gargerät 1 kann weiterhin Kochstellen 29 aufweisen.

In Figur 2 ist ein Gargerät 1 in einer perspektivischen schematischen Ansicht dargestellt, welches im vorliegenden Fall als Einbaubackofen ausgeführt ist. Das den Garraum 3 umgehende Gehäuse 2 kann wiederum von einem hier nicht dargestellten Möbelcorpus umgeben werden. In Figur 2 ist das Gargerät 1 mit halb geöffneter Tür 32 dargestellt. Oberhalb des Garraumes 3 ist Platz für die Steuereinrichtung 4 (hier nicht sichtbar) vorgesehen. Die Elektronik der Steuereinrichtung 4 wird über eine Gerätekühlung 15 gekühlt.

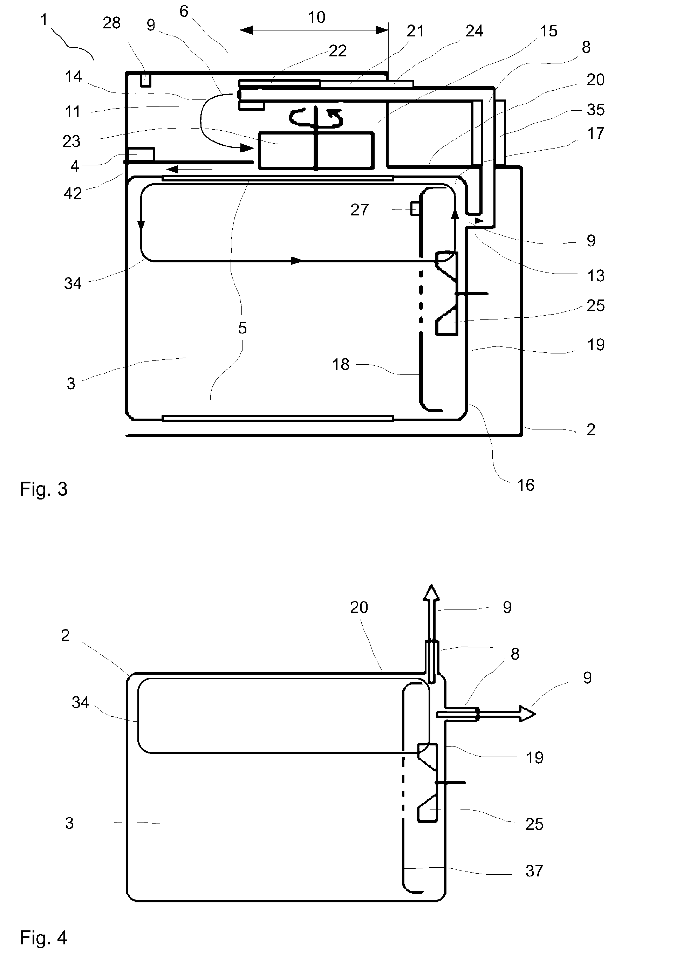

Figur 3 zeigt einen stark schematischen Querschnitt durch das Gargerät 1 gemäß Figur 2 oder auch Figur 1, wobei der besseren Übersichtlichkeit wegen nicht alle Komponenten eingezeichnet sind.

Das Gargerät 1 weist ein Gehäuse 2 auf, an dem der Garraum 3 vorgesehen ist. In dem Garraum 3 sind hier zwei Heizeinrichtungen 5 für Ober- und Unterhitze vorgesehen. Am rückwärtigen Ende 16 des Garraumes 3 ist eine Heizluftrückwand 18 eingebaut bzw. eingestellt, hinter der ein Ventilator 25 für das Heizluftgebläse vorgesehen ist. Für den Heißluftbetrieb ist die Strömung 34 eingezeichnet. Beim Heißluftbetrieb wird Luft aus dem Garraum 3 in einem zentralen Bereich angesaugt und durch den Ventilator 25 hinter der Heißluftrückwand 18 nach oben gedrückt und durch den Auslassbereich 17 am oberen Ende des Backofens wieder in den Garraum hineingeleitet.

In dem in Fig. 3 dargestellten Ausführungsbeispiel ist an dem Ausblasbereich 17 das erste Ende 13 eines Abfuhrkanals 8 angeordnet, wobei sich der Abfuhrkanal 8 von dem ersten Ende 13 von dem Garraum aus bis in den oberen Bereich der Gerätekühlung 15 hin erstreckt. Dort ist das zweite Ende 14 des Abfuhrkanals 8 vorgesehen. Dabei ist das zweite Ende 14 des Abfuhrkanals 8 vorzugsweise so angeordnet, dass es in einem Unterdruckbereich der Gerätekühlung 15 endet, sodass durch den Unterdruck bedingt eine Probe 9 hier kontinuierlich aus dem Abfuhrkanal 8 abgesaugt wird, sodass dem Abfuhrkanal 8 kontinuierlich eine Messprobe 9 aus dem Garraum 3 zugeführt wird.

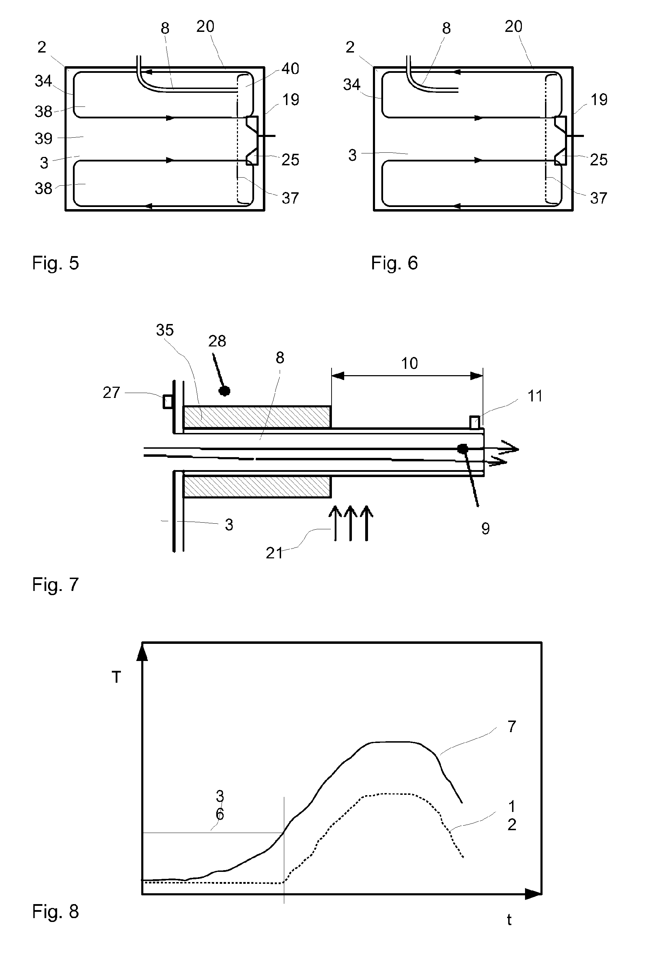

An dem Abfuhrkanal 8 ist ein Kondensationsabschnitt 10 vorgesehen, an dem die zu messende Probe 9 aus dem Garraum 3 vorzugsweise teilweise kondensiert wird, um aus der Kondensationstemperatur 12 (vgl. Fig. 6) auf die relative Luftfeuchtigkeit 7 in dem Garraum 3 zurückzuschließen.

Der Kondensationsabschnitt 10 kann an dem zweiten Ende 14 des Abfuhrkanals 8 vorgesehen sein, kann aber auch beabstandet von diesem angeordnet werden. Vorzugsweise wird der Kondensationsabschnitt 10 von dem ersten Ende 13 des Abfuhrkanals 8 wenigstens ein Stück weit entfernt angeordnet, damit der Kondensationsabschnitt einer möglichst geringen Umgebungstemperatur ausgesetzt wird. Je geringer die mögliche Kondensationstemperatur in dem Kondensationsabschnitt 10, desto geringere relative Luftfeuchtigkeiten können für den Garraum 3 ermittelt werden. Deshalb ist eine Anordnung des Kondensationsabschnittes 10 im Bereich der Gerätekühlung 15 bevorzugt, da dort eine relativ geringe Temperatur des Gargerätes 1 vorliegt.

Möglich ist es aber auch, den Kondensationsabschnitt 10 außerhalb des Gargerätes 1 vorzusehen oder aber den Kondensationsabschnitt 10 zusätzlich noch über eine Kühleinrichtung 21 zu kühlen. Dabei kann die Kühleinrichtung 21 ein Peltierelement 22 oder eine Heatpipe 24 umfassen, mit der bzw. mit denen eine Abfuhr von Wärme an dem Kondensationsabschnitt möglich ist, um möglichst geringe Kondensationstemperaturen messen zu können.

An dem Kondensationsabschnitt 10 ist ein Temperatursensor 11 zur Erfassung der Kondensationstemperatur vorgesehen. Dabei ist der Temperatursensor 11 vorzugsweise gut Wärme leitend mit dem Kondensationsabschnitt verbunden, kann aber durch die beispielsweise aus Metall bestehende Wandung des Kondensationsabschnitts 10 gut geschützt vor Einflüssen durch möglicherweise schädliche Stoffe in der Probe 9 angeordnet sein, sodass der Temperatursensor 11 zuverlässig und über lange Zeiträume hinweg die Messwerte in der erforderlichen Genauigkeit liefern kann.

Wie in Fig. 4 dargestellt, ist es möglich, dass der Abfuhrkanal 8 an der Deckenwand 20 des Garraumes 3 angeordnet ist. Möglich ist es aber auch, wie in Fig. 3 ebenfalls dargestellt, den Abfuhrkanal 8 an der Rückwand 19 des Garraumes vorzusehen. Möglich ist es auch, einen ersten Abfuhrkanal 8 an der Deckenwand 20 und einen zweiten Abfuhrkanal 8 an der Rückwand 19 anzuordnen, sodass über zwei entsprechende Temperatursensoren 11 Messwerte für die relative Feuchtigkeit in dem Garraum 3 erfassbar sind. Dadurch liegt ein redundantes System vor, wobei beispielsweise der Mittelwert oder der realistischere der beiden Messwerte zur Auswertung verwendet werden kann.

Fig. 5 zeigt einen schematisierten Querschnitt durch den Garraum 3 eines weiteren Gargeräts 1. Der Abfuhrkanal 8 beginnt in dem Überdruckbereich der Heißluftkassette 37, hier oberhalb des Ventilators 25 und führt hier durch die obere Garraumwandung nach außen, wo die abgeführte Probe kondensiert wird.

Insbesondere ist das Ende des ersten Abfuhrkanals 8 an einer Stelle und in einer Richtung durch die Wand des Garraums vorgesehen ist, an der der Luftdruck höher ist als an dem Kondensationsabschnitt 10.

Es ist möglich, dass sich das erste Ende 13 des Abfuhrkanals 8 an einer Wand der Heißluftkassette 37 im Überdruckbereich 40 des Lüfterradradius befindet, wie es Fig. 5 zeigt. Der Abfuhrkanal beginnt dort in dem Überdruckbereich 40 der Heißluftkassette 37.

Möglich ist es auch, dass das erste Ende 13 des Abfuhrkanals durch eine Wand des Garraums 3 in den Überdruckbereich 38 der Strömung des Ventilators 25 eintaucht, wie in Fig. 6 darstellt.

Dann kann sich das erste Ende 13 des Abfuhrkanals 8 im Garraum außerhalb der Heißluftkassette 37 im Überdruckbereich 38 vorzugsweisein mindestens einer Ausblasöffnung der Heißluftkassette 37 befinden oder davon entfernt angeordnet sein.

Fig. 7 zeigt in einer schematischen Darstellung einen Abfuhrkanal 8 an einem Garraum 3, wobei der Abfuhrkanal 8 von dem ersten Ende 13 aus bis zum Beginn des Kondensationsabschnittes 10 eine Isolierschicht 35 aufweist, damit sich die Probe 9 beim Transport durch den Abfuhrkanal 8 möglichst wenig abkühlt und eine Kondensation vor Beginn des Kondensationsabschnittes 10 weitgehend vermieden wird. Der Kondensationsabschnitt 10 kann über eine Kühleinrichtung 21 gekühlt werden, um geringere Kondensationstemperaturen zu ermöglichen. Der Temperatursensor 11 erfasst die Kondensationstemperatur der Probe 9. Ein Temperatursensor 28 kann zur Erfassung der Umgebungstemperatur des Abfuhrkanals 8 dienen. Im Garraum 3 kann ein Temperatursensor 27 vorgesehen sein, um die relative Feuchtigkeit exakt zu bestimmen.

Fig. 8 zeigt den Temperaturverlauf der Kondensationstemperatur 12 über der Zeit eines Garprozesses sowie den Verlauf der relativen Luftfeuchtigkeit 7 in dem Garraum 3, wobei die relative Luftfeuchtigkeit in dem Garraum 3 durch die von dem im Garraum 3 enthaltenen Gargut abgegebene Dampfmenge bestimmt wird.

Klar erkennbar ist, dass die in dem Garraum 3 vorhandene relative Luftfeuchtigkeit 7 über der Zeit des Garprozesses ansteigt, ein Maximum durchläuft und wieder abfällt. Die Kondensationstemperatur 12, die mit dem Temperatursensor 11 an dem Kondensationsabschnitt 10 erfasst wurde, korreliert mit dem Verlauf der relativen Luftfeuchtigkeit 7.

Allerdings ergibt sich, dass erst ab einer bestimmten Grenzfeuchte 36 die relative Luftfeuchtigkeit 7 über den Temperaturverlauf der Kondensationstemperatur 12 ermittelt werden kann. Das liegt daran, dass die tatsächlich mit dem Temperatursensor 11 gemessene Temperatur erst dann oberhalb der den Kondensationsabschnitt umgebenden Umgebungstemperatur liegt, wenn die relative Luftfeuchtigkeit die Grenzfeuchte 36 übersteigt, sodass die entsprechende Kondensationstemperatur höher als die Umgebungstemperatur im Bereich des Kondensationsabschnittes liegt.

Liegt die Grenzfeuchte 36 in einem zu hohen Bereich, kann durch Einschaltung der Kühleinrichtung 21 die praktisch vorliegende Umgebungstemperatur des Umgebungsabschnittes gesenkt werden, sodass auch geringere Grenzfeuchten 36 messbar sind.

Insgesamt ermöglicht die Erfindung die Protokollierung und Erfassung der relativen Feuchtigkeit in dem Garraum über der Zeit, sodass der Garprozess mit den ermittelten Daten steuerbar ist. Insbesondere kann auch der Fertigzeitpunkt erkannt werden. Die Erfindung stellt eine technisch robuste Lösung zur Verfügung, die relativ kostengünstig ist und die Steuerung des Garprozesses und eine Fertigzeitpunkterkennung ermöglicht. Durch die Anordnung des Temperatursensors bzw. durch die Anordnung des ersten Endes 13 des Abfuhrkanals 8 hinter oder im Ausblasbereich der Heißluftrückwand wird eine zuverlässige Abfuhr einer Luftprobe aus dem Garraum 3 gewährleistet, da dort im Umluftbetrieb ein konstanter Überdruck vorliegt. Durch die Anordnung des zweiten Endes 14 des Abfuhrkanals 8 in einem Unterdruckbereich, insbesondere an der Kühleinrichtung des Gargeräts 1, wird eine gleichmäßige Strömung durch den Abfuhrkanal gewährleistet.

In allen Fällen kann der Abfuhrkanal 8 zur Abfuhr des Wrasens dienen oder separat davon vorgesehen sein. Möglich ist es auch, den Abfuhrkanal 8 über ein Ventil oder eine Schlauchquetsche oder dergleichen abzuklemmen, wenn dessen Funktion nicht benötigt wird.

Zur Kühlung des Kondensationsabschnittes 10 kann ein Kühlkörper oder eine aktive Kühleinrichtung vorgesehen sein. Die Messung der Temperatur des Umgebungsbereiches des Kondensationsabschnittes 10 kann auch sinnvoll sein, um eine sich erhöhende Umgebungstemperatur im Zeitverlauf eines Garvorganges zu erfassen und entsprechend zu berücksichtigen.

### Bezugszeichenliste

- 1: Gargerät
- 2: Gehäuse
- 3: Garraum
- 4: Steuereinrichtung
- 5: Heizeinrichtung
- 6: Messeinrichtung
- 7: Luftfeuchtigkeit
- 8: Abfuhrkanal
- 9: Probe
- 10: Kondensationsabschnitt
- 11: Temperatursensor
- 12: Kondensationstemperatur
- 13, 14: erstes Ende, zweites Ende
- 15: Gerätekühlung
- 16: rückwärtiges Ende
- 17: Ausblasbereich
- 18: Heißluftrückwand
- 19: Rückwand
- 20: Deckenwand
- 21: Kühleinrichtung
- 22: Peltierelement
- 23: Ventilator
- 24: Heatpipe
- 25: Ventilator
- 26: Auswerteinrichtung
- 27, 28: Temperatursensor
- 29: Kochstelle
- 30: Anzeige
- 31: Bedienknopf
- 32: Tür
- 34: Strömung
- 35: Isolierschicht
- 36: Grenzfeuchte
- 37: Heißluftkassette
- 38: Überdruckbereich
- 39: Unterdruckbereich
- 40: Überdruckbereich

## Patentansprüche

1. Gargerät (1) mit einem Gehäuse (2) und wenigstens einem daran vorgesehenen Garraum (3), wenigstens einer Steuereinrichtung (4), wenigstens einer Heizeinrichtung (5) und mit wenigstens einer Messeinrichtung (6), um ein Maß für die relative Luftfeuchtigkeit (7) in dem Garraum (3) zu bestimmen,
**dadurch gekennzeichnet,**
**dass** die Messeinrichtung (6) wenigstens einen Abfuhrkanal (8) zur Ableitung wenigstens einer Probe (9) aus dem Garraum (3) umfasst, wobei der Abfuhrkanal (8) einen Kondensationsabschnitt (10) mit wenigstens einem Temperatursensor (11) aufweist und der Temperatursensor (11) zur Erfassung einer charakteristischen Kondensationstemperatur (12) der Probe (9) vorgesehen ist, um aus der Kondensationstemperatur (12) der Probe (9) ein Maß für die Luftfeuchtigkeit (7) in dem Garraum (3) abzuleiten.

2. Gargerät (1) nach Anspruch 1,
**dadurch gekennzeichnet,**
**dass** der Abfuhrkanal (8) mit einem ersten Ende (13) in den Garraum (3) mündet.

3. Gargerät (1) nach Anspruch 1 oder 2,
**dadurch gekennzeichnet,**
**dass** der Abfuhrkanal (3) mit einem zweiten Ende (14) in einem Ansaugbereich der Gerätekühlung (15) mündet.

4. Gargerät (1) nach einem der vorhergehenden Ansprüche,
**dadurch gekennzeichnet, dass** das Ende des ersten Abfuhrkanals (8) an einer Stelle und in einer Richtung durch die Wand des Garraums (3) vorgesehen ist, an der der Luftdruck höher ist als an dem Kondensationsabschnitt (10).

5. Gargerät (1) nach einem der vorhergehenden Ansprüche,
**dadurch gekennzeichnet, dass** sich das erste Ende (13) des Abfuhrkanals (8) an einer Wand der Heißluftkassette (37) im Überdruckbereich (40) des Lüfterradradius befindet.

6. Gargerät (1) nach einem der vorhergehenden Ansprüche,
**dadurch gekennzeichnet, dass** das erste Ende (13) des Abfuhrkanals durch eine Wand des Garraums (3) in den Überdruckbereich (40) der Heißluftkassette (37) eintaucht.

7. Gargerät (1) nach einem der vorhergehenden Ansprüche,
**dadurch gekennzeichnet,**
**dass** sich das erste Ende (13) des Abfuhrkanals (8) im Garraum (3) außerhalb der Heißluftkassette (37) im Überdruckbereich (38) vorzugsweise mindestens einer Ausblasöffnung der Heißluftkassette (37) befindet.

8. Gargerät (1) nach einem der vorhergehenden Ansprüche,
**dadurch gekennzeichnet,**
**dass** der Abfuhrkanal (8) wenigstens an dem Kondensationsabschnitt (10) wenigstens teilweise aus Metall besteht.

9. Gargerät (1) nach einem der vorhergehenden Ansprüche,
**dadurch gekennzeichnet,**
**dass** wenigstens der Kondensationsabschnitt (10) des Abfuhrkanals (8) kühlbar ist.

10. Gargerät (1) nach einem der vorhergehenden Ansprüche,
**dadurch gekennzeichnet,**
**dass** der Abfuhrkanals (8) zwischen dem ersten Ende (13) und dem Kondensationsabschnitt (10) eine Isolierung (35) aufweist.

11. Gargerät (1) nach einem der vorhergehenden Ansprüche,
**dadurch gekennzeichnet,**
**dass** an dem Kondensationsabschnitt (10) eine Kühleinrichtung (21) vorgesehen ist, welche insbesondere wenigstens ein Peltierelement (22) und/oder einen Ventilator (23) und/oder eine Heatpipe (24) und/oder einen Kühlkörper umfasst.

12. Gargerät (1) nach einem der vorhergehenden Ansprüche,
**dadurch gekennzeichnet,**
**dass** die Steuereinrichtung (4) dazu strukturiert ist, aus der Kondensationstemperatur (12) ein Maß für die Luftfeuchte (7) in dem Garraum (3) abzuleiten.

13. Gargerät (1) nach einem der vorhergehenden Ansprüche,
**dadurch gekennzeichnet,**
**dass** wenigstens ein Temperatursensor (27) zur Erfassung der Garraumtemperatur vorgesehen ist.

14. Gargerät (1) nach den Ansprüchen 9 und 10,
**dadurch gekennzeichnet,**
**dass** die Steuereinrichtung (4) dazu strukturiert ist, aus der Kondensationstemperatur (12) und der Umgebungstemperatur (28) ein Maß für die relative und/oder absolute Luftfeuchtigkeit in dem Garraum (3) abzuleiten.

15. Gargerät (1) nach einem der vorhergehenden Ansprüche,
**dadurch gekennzeichnet,**
**dass** wenigstens ein Temperatursensor (28) zur Erfassung der Umgebungstemperatur vorgesehen ist.

16. Gargerät (1) nach einem der vorhergehenden Ansprüche,
**dadurch gekennzeichnet,**
**dass** die Messung der Luftfeuchte (7) kontinuierlich erfolgt oder in periodischen Abständen wiederholt wird.

17. Verfahren zur Bestimmung eines Maßes für die Luftfeuchtigkeit (7) in dem Garraum (3) eines Gargerätes (2), wobei eine Probe (9) aus dem Garraum (3) heraus und in einen Abfuhrkanal (8) einer Messeinrichtung (5) geleitet wird, wo die Probe (9) wenigstens teilweise kondensiert wird, um aus der Kondensationstemperatur (12) ein Maß für die Luftfeuchtigkeit (7) in dem Garraum (3) abzuleiten.
